# EUROPÄISCHE PATENTANMELDUNG

(11) **EP 1 609 637 A1**
(43) Veröffentlichungstag der Anmeldung: **28.12.2005**
(21) Anmeldenummer: 05008118.1
(22) Anmeldetag: 14.04.2005
(51) Int. Cl.: B60H 1/00, F16L 41/00, F24F 13/02

(54) **Anschlussrohr für ein Luftführungssystem in einem Fahrzeug**

(30) Priorität: 21.06.2004 DE 102004029910
(71) Anmelder: J. Eberspächer GmbH & Co. KG, 73730 Esslingen (DE)
(72) Erfinder: Collmer, Andreas, 73773 Aichwald (DE); Schlecht, Patric, 73760 Ostfildern (DE); Haefner, Michael, 70469 München (DE)

(57) **Zusammenfassung**

Ein Anschlussrohr, insbesondere für ein Luftführungssystem in einem Fahrzeug, umfasst einen Rohrkörper (20), an dem Rohrkörper (20)einen Abstützbereich (22) zur Abstützung an einer Tragestruktur (14), wenigstens ein Arretierelement (40), durch welches der Abstützbereich (22) in Abstützanlage an der Tragestruktur (14) arretierbar ist, wobei das wenigstens eine Arretierelement (40) einen Rastbereich (44)aufweist, der in Zusammenwirkung mit einem Gegen-Rastbereich (46) eine Bewegung des Arretierelements (40) in einer ersten Richtung (R1) zulässt und eine Bewegung in einer der ersten Richtung (R1) entgegengesetzten zweiten Richtung (R2) nicht zulässt, wobei bei Bewegung in der ersten Richtung (R1) ein Arretierabschnitt (42) des wenigstens einen Arretierelements (40) sich in Richtung auf den Abstützbereich (22) zu bewegt.

## Beschreibung

Die vorliegende Erfindung betrifft ein Anschlussrohr, wie es beispielsweise in einem Luftführungssystem in einem Fahrzeug eingesetzt werden kann.

Derartige Luftführungssysteme dienen dazu, die beispielsweise in einem Heizgerät oder einer Klimaanlage konditionierte Luft in einen Fahrzeuginnenraum einzuleiten. Dazu ist es beispielsweise erforderlich, das Rohrleitungssystem von demjenigen Bereich, in welchem die Luft Wärme aufnimmt oder abgibt, also einem Wärmetauscher, in den Fahrzeuginnenraum oder einen sonstigen zu konditionierenden Raum zu führen. Da ein derartiger Raum im Allgemeinen durch Wände umgeben ist bzw. zum Erreichen eines derartigen Raums das Leitungssystem möglicherweise durch verschiedene Wände hindurch geführt werden muss, kann es erforderlich sein, im Bereich einer derartigen Hindurchführung eine stabile Halterung des Leitungssystems an einer derartigen Wand zu erlangen. Dies vermeidet einerseits Klappergeräusche so wie die Gefahr der Beschädigung des Rohrleitungssystems, bietet andererseits aber die Möglichkeit, durch definierte Festlegung des Rohrsystems bezüglich oder an einer derartigen Wand auch definierte Einströmbereiche bzw. Ausströmbereiche bereitzustellen. Auch ein optisch ansprechender Abschluss des Leitungssystems soll erreicht werden.

Um eine derartige Festlegung zu erlangen, ist es beispielsweise bekannt, einen hierzu eingesetzten Rohrkörper mit Außengewinde zu versehen, so dass durch Aufschrauben einer den Rohrkörper dann umgebenden Mutter in Verbindung mit einem Abstützbereich an dem Rohrkörper eine feste Klemmung erlangt werden kann. Dies erfordert jedoch einerseits den Aufbau des Rohrkörpers aus das Einbringen eines Gewindes zulassendem Material und erfordert weiterhin eine gute Zugänglichkeit desjenigen Bereichs, von welchem nach Positionierung des Rohrkörpers an der Wand bzw. hindurchführend durch eine Öffnung in einer derartigen Wand dann die Mutter aufgebracht werden muss. Zur Festlegung ist auch grundsätzlich die Verwendung von Schrauben üblich.

Es ist die Aufgabe der vorliegenden Erfindung, ein Anschlussrohr, insbesondere für ein Luftführungssystem in einem Fahrzeug, vorzusehen, mit welchem in einfacher, gleichwohl jedoch zuverlässig wirkender Art und Weise eine Festlegung an einer Tragestruktur erlangt werden kann.

Erfindungsgemäß wird diese Aufgabe gelöst durch ein Anschlussrohr, insbesondere für ein Luftführungssystem in einem Fahrzeug, umfassend einen Rohrkörper, an dem Rohrkörper einen Abstützbereich zur Abstützung an einer Tragestruktur, wenigstens ein Arretierelement, durch welches der Abstützbereich in Abstützanlage an der Tragestruktur arretierbar ist, wobei das wenigstens eine Arretierelement einen Rastbereich aufweist, der in Zusammenwirkung mit einem Gegen-Rastbereich eine Bewegung des Arretierelements in einer ersten Richtung zulässt und eine Bewegung in einer der ersten Richtung entgegengesetzten zweiten Richtung nicht zulässt, wobei bei Bewegung in der ersten Richtung ein Arretierabschnitt des wenigstens einen Arretierelements sich in Richtung auf den Abstützbereich zu bewegt.

Bei dem erfindungsgemäßen Anschlussrohr wird also die Festlegung bzw. Arretierung bezüglich einer Tragestruktur nicht durch Verschraubung oder dergleichen erlangt, sondern unter Einsatz eines oder mehrerer Arretierelemente, die einerseits zum Herstellen der Arretierwirkung bewegt werden können, andererseits aber bei einmal hergestellter Arretierwirkung durch Rastwirkung festgehalten sind und sich somit nicht mehr zurückbewegen können. Es ist somit in einfacher Art und Weise durch Bewegen des wenigstens einen Arretierelements in der ersten Richtung der Arretierzustand herstellbar. Ist dieser einmal erlangt, bleibt er auch zuverlässig beibehalten.

Beispielsweise kann vorgesehen sein, dass der Abstützbereich einen über den Rohrkörper nach radial außen vorspringenden Vorsprungsbereich umfasst.

Um eine zuverlässige Arretierwirkung bzw. Rastwirkung erlangen zu können, wird weiter vorgeschlagen, dass der Gegen-Rastbereich eine Durchgangsöffnung für den Rastbereich des wenigstens einen Arretierelements umfasst, wobei zur Herstellung der Rastwechselwirkung oder bei hergestellter Rastwechselwirkung der Rastbereich durch die Durchgangsöffnung hindurch geführt ist. Dabei kann aus Stabilitätsgründen vorgesehen sein, dass die Durchgangsöffnung wenigstens bereichsweise in dem Abstützbereich vorgesehen ist.

Beispielsweise kann der Rastbereich eine Mehrzahl von Rasteinsenkungen umfassen, in welche wenigstens ein Rastvorsprung des Gegen-Rastbereichs eingreifen kann.

Um die Arretierwechselwirkung des wenigstens einen Arretierelements mit der Tragestruktur erlangen zu können, wird vorgeschlagen, dass der Arretierabschnitt des wenigstens einen Arretierelements einen zur Arretieranlage an der Tragestruktur nach radial außen vorspringenden Arretiervorsprung umfasst. Hier kann eine erhöhte Stabilität bzw. Sicherheit einerseits und eine Zentrierfunktion andererseits dadurch erlangt werden, dass der Arretiervorsprung keilartig ausgebildet ist.

Wie eingangs bereits ausgeführt, wird ein derartiges Anschlussrohr im Allgemeinen mit seinem Rohrköper durch eine Öffnung in einer Wand, also einer Tragestruktur, hindurchgeführt, bis der Abstützbereich an dieser Struktur anliegt. Darauf folgend wird dann die Arretierung erlangt, im Falle der vorliegenden Erfindung durch Bewegen wenigstens eines Arretierelements in der ersten Richtung. Da bei hergestellter Arretierwirkung dieses wenigstens eine Arretierelement in einer Positionierung sein muss, in welcher es an der Tragestruktur angreifen kann, muss weiter dafür gesorgt werden, dass vor Herstellung dieses Arretierzustandes der Rohrkörper so positioniert werden kann, dass einerseits der Abstützbereich in Anlage an der Tragestruktur ist, andererseits das wenigstens eine Arretierelement mit seinem Arretierabschnitt an der anderen Seite der Tragestruktur positioniert ist, um von dieser Seite her dann in Richtung auf den Abstützbereich und auch die Tragestruktur zu bewegt werden zu können. Es wird daher weiter vorgeschlagen, dass in dem Rohrkörper eine Montagevorbereitungs-Aufnahmeformation für den Arretierabschnitt des wenigstens einen Arretierelements vorgesehen ist, in welcher der Arretierabschnitt in einer Montagevorbereitungsstellung aufgenommen ist.

Eine sehr Platz sparende und einfach zu realisierende Ausgestaltungsform kann hier vorsehen, dass die Montagevorbereitungs-Aufnahmeformation eine Öffnung in einer Wandung des Rohrkörpers umfasst, in welche das wenigstens eine Arretierelement wenigstens mit seinem Arretierabschnitt in der Montagevorbereitungsstellung derart eingeführt ist, dass wenigstens ein Teil des Arretierabschnitts im Innenbereich des Rohrkörpers aufgenommen ist.

Um bei Positionierung des wenigstens einen Arretierelements in der Montagevorbereitungsstellung ohne weitere schwierige Manipulationsvorgänge den Arretierzustand erlangen zu können, wird weiter vorgeschlagen, dass in der Montagevorbereitungsstellung das wenigstens eine Arretierelement in die Durchgangsöffnung eingeführt ist.

Eine stabile Halterung des Rohrkörpers insbesondere bei kreisrunder Ausgestaltung desselben kann weiterhin dadurch unterstützt werden, dass an dem Abstützbereich eine Haftlage zur Herstellung einer Haftwechselwirkung mit der Tragestruktur vorgesehen ist.

Insbesondere dann, wenn das erfindungsgemäße Anschlussrohr an einer Wand eines die zu fördernde Luft aufnehmenden oder abgebenden Raumbereichs vorgesehen ist, kann das Anschlussrohr weiter gekennzeichnet sein durch eine erste Halteformation für ein Luftausströmelement oder/und ein Lufteinströmelement, wobei bei einer besonders einfach zu realisierenden Ausgestaltungsvariante vorgesehen sein kann, dass die erste Halteformation an dem Abstützbereich oder dem Luftausströmelement bzw. Lufteinströmelement vorgesehen ist.

Bei einem Luftführungssystem ist es im Allgemeinen erforderlich, das Anschlussrohr durch beispielsweise flexible Rohrleitungen in Verbindung einerseits mit dem die Luft zuführenden Systembereich zu bringen, ggf. aber auch in Verbindung mit dem die geförderte Luft aufnehmenden Systembereich. Es wird daher weiter vorgeschlagen, dass an dem Rohrkörper eine zweite Halteformation für eine an dem Rohrkörper festzulegende Rohrleitung vorgesehen ist. Diese zweite Halteformation kann wenigstens einen hakenartigen Haltevorsprung umfassen, der dann nach Art eines Widerhakens an der Rohrleitung angreift und diese somit bezüglich des Rohrkörpers festhält.

Der wenigstens eine hakenartige Vorsprung kann beispielsweise an einem von dem Rohrkörper separat ausgebildeten und daran fest gehaltenen Halteelement vorgesehen sein. Alternativ ist es möglich, dass der wenigstens eine Haltevorsprung an einer mit dem Rohrkörper integral ausgebildeten Haltezunge vorgesehen ist.

Die vorliegende Erfindung wird nachfolgend mit Bezug auf die beiliegenden Zeichnungen detailliert beschrieben. Es zeigt:
- Fig. 1: eine Längsschnittansicht eines Rohrleitungssystems mit einem erfindungsgemäßen Anschlussrohr;
- Fig. 2: eine Anfangsphase bei der Montage des erfindungsgemäßen Anschlussrohrs an einer Wand;
- Fig. 3: eine weitere Phase des Montagevorgangs bei bereits an der Wand positioniertem Anschlussrohr;
- Fig. 4: eine Detailansicht des erfindungsgemäßen Anschlussrohrs im bereits realisiertem Arretierzustand;
- Fig. 5: eine der Fig. 4 entsprechende Ansicht einer abgewandelten Ausgestaltungsvariante;
- Fig. 6: eine der Fig. 1 entsprechende Ansicht einer abgewandelten Ausgestaltungsvariante mit separaten Halteelementen;
- Fig. 7: eine perspektivische Ansicht des bei der Ausgestaltungsvariante der Fig. 6 eingesetzten Anschlussrohrs;
- Fig. 8: eine weitere der Fig. 1 entsprechende Ansicht einer abgewandelten Ausgestaltungsvariante;
- Fig. 9: eine perspektivische Ansicht des bei der Ausgestaltungsvariante der Fig. 8 eingesetzten Anschlussrohrs;
- Fig. 10: das in Fig. 9 perspektivisch dargestellte Anschlussrohr im Längsschnitt in einer Phase des Montagevorgangs.

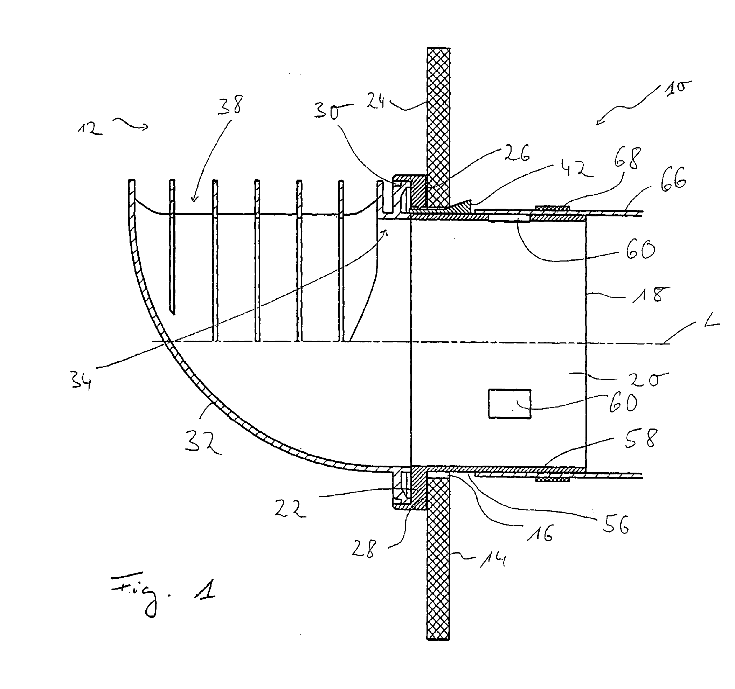

In Fig. 1 ist der Endbereich eines allgemein mit 10 bezeichneten Rohrleitungssystems dargestellt. Durch ein derartiges Rohrleitungsstem wird beispielsweise die in einem Heizgerät oder in einer Klimaanlage konditionierte Luft in einen Raum 12, beispielsweise den Innenraum eines Kraftfahrzeugs, geleitet. Dieser Raum 12 ist durch eine für das Rohrleitungssystem 10 eine Tragestruktur bereitstellende Wand 14 bzw. eine darin ausgebildete Öffnung 16 hindurchgeführt und ist, wie im Folgenden dargelegt wird, an dieser Wand 14 fest arretiert.

Man erkennt bereits in Fig. 1, dass das Rohrleitungssystem 10 ein diese Arretierung an der Wand 14 vorsehendes Anschlussrohr 18 umfasst. Dieses Anschlussrohr 18 weist einen beispielsweise mit kreisrunder Gestaltung und zylindrisch ausgebildetem Rohrkörper 20 auf. An einem axialen Ende - bezogen auf eine Längsmittenanschse L des Rohrkörpers 20 - ist an dem Rohrkörper 20 ein nach radial außen vorspringender und den Rohrkörper 20 im Wesentlichen im gesamten Umfangsbereich umgebender flanschartiger Vorsprungsbereich 22 ausgebildet, mit welchem das Anschlussrohr 18 im montierten Zustand an einer dem Raum 12 zugewandten Seite 24 der Wand 14 anliegt bzw. abgestützt ist. Hierzu weist der Vorsprungsbereich 22 eine im Wesentlichen axial gerichtete Abstützfläche 26 auf. Um eine weiter verbesserte Halterung bzw. Arretierung zu erlangen, kann an dieser Abstützfläche 26 des Vorsprungsbereichs 22 beispielsweise in Form eines zweiseitigen Klebebandes 28 ein Haftmittel vorgesehen sein, um insbesondere auch das Verdrehen des Anschlussrohrs 18 in der beispielsweise ebenfalls kreisrund ausgestalteten Öffnung 16 zu verhindern.

An dem Vorsprungsbereich 22 ist eine Einsenkung 30 vorgesehen, in welche ein eine Einströmdüse oder Ausströmdüse bereitstellendes Luftströmelement 32 mit einem entsprechend geformten Anschlussbereich 34 eingesetzt ist. In der Einsenkung 30 bzw. an dem Vorsprungsbereich 22 können mehrere Rastvorsprünge 36 ausgebildet sein, die bei Einführen des Anschlussbereichs 34 in die Einsenkung 30 in Rastwirkung mit diesem treten und somit eine feste Halterung des Luftströmelements 32 an dem Vorsprungsbereich 22 sicherstellen, gleichwohl jedoch bei beispielsweise kreisrunder Ausgestaltung eine Drehbarkeit des Luftströmelements 32 zulassen und somit eine gewisse Freiheit bei der Orientierung der Öffnung 38 desselben gestatten. Diese Halteformation kann auch zwischen dem Luftströmelement 32 und dem Rohrkörper 20 wirken.

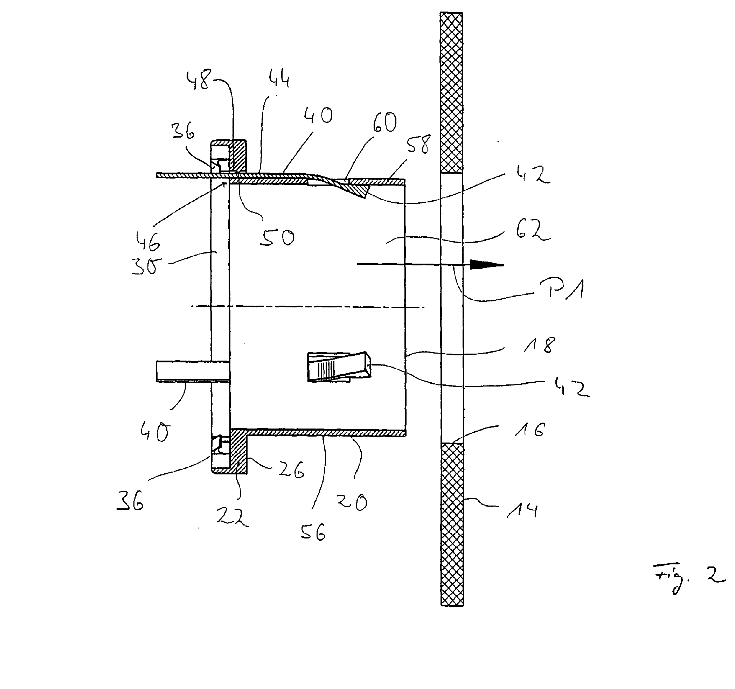

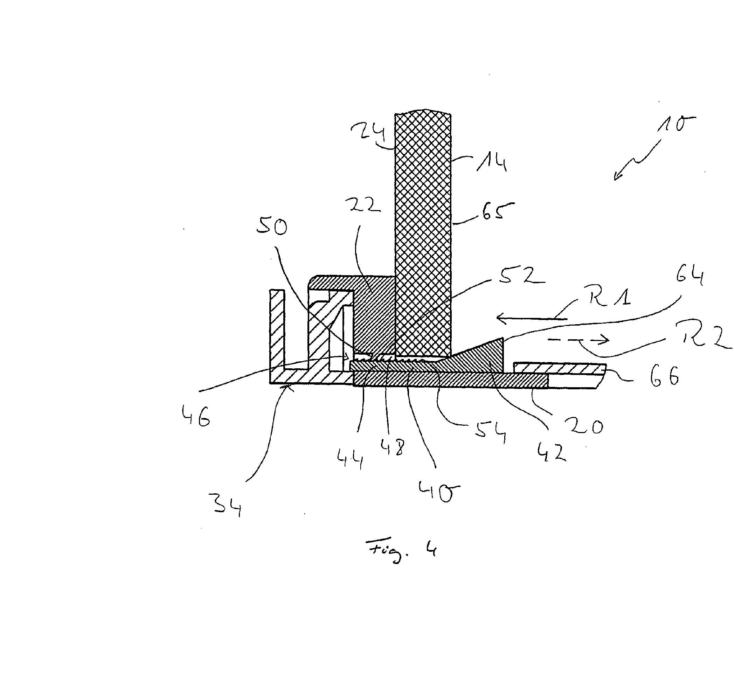

Zur Festlegung des Anschlussrohrs 20 an der Wand 14 sind über den Umfang des Anschlussrohrs 18 verteilt mehrere Arretierelemente 40 vorgesehen. Diese Arretierelemente 40 sind im Wesentlichen langgestreckt und bandartig aus flexiblem Material aufgebaut. Jedes Arretierelement 40 umfasst einen Arretierabschnitt 42 mit welchem es in Arretierwechselwirkung mit der Wand 14 tritt, und umfasst weiterhin einen Rastbereich 44, der in Zusammenwirkung mit einem jeweils zugeordneten Gegen-Rastbereich 46 die gewünschte Arretierung vorsieht. Dieser bzw. jeder Gegen-Rastbereich 46 umfasst eine Durchgangsöffnung 48, die im dargestellten Beispiel im Vorsprungsbereich 22 ausgestaltet ist und die im Wesentlichen axiale Hindurchführung eines Arretierelements 40 gestattet. In dieser Durchgangsöffnung 48 ist ein in Fig. 2 und insbesondere auch in Fig. 4 erkennbarer Rastvorsprung 50 vorgesehen. Bei in die Durchgangsöffnung 48 eingeführtem Arretierelement 40 liegt diesem Rastvorsprung 50 eine Mehrzahl von Rasteinsenkungen 52 des Rastbereichs 44 gegenüber, wobei diese Einsenkungen 52 gebildet sein können zwischen einzelnen sägezahnartig ausgestalteten Vorsprüngen 54.

Das Anschlussrohr 18 ist mit seinem Rohrkörper 20 und dem Vorsprungsbereich 22 integral aus Kunststoffmaterial, also mit einer gewissen Flexibilität versehenem Material, aufgebaut, so dass insbesondere auch im Bereich des Rastvorsprungs 50 die zur Erlangung der Rastwechselwirkung erforderliche Elastizität vorhanden ist. Die Ausgestaltung des Rastvorsprungs 50 einerseits und der Vorsprünge 54 bzw. der Rasteinsenkungen am Rastbereich 44 andererseits ist derart, dass bei hergestellter Rastwechselwirkung das Arretierelement 40 in einer ersten Richtung R1 bezüglich des Rohrkörpers 20 und somit auch des Vorsprungsbereichs 22 bewegt werden kann, jedoch nicht in einer dieser Richtung R1 im Wesentlichen entgegengesetzten Richtung R2. Dies bedeutet, dass grundsätzlich das Arretierelement 40 bzw. jedes Arretierelement 40 auch nur so bewegt werden kann, dass sein Arretierabschnitt 42 sich dem Vorsprungsbereich 22, also dem Abstützbereich, annähert, sich jedoch von diesem nicht wieder entfernen kann. Bei dieser Bewegung gleitet das Arretierelement 40 auf einer Außenoberfläche 56 einer Rohrwandung 58 des Rohrkörpers 20.

Die verschiedenen Phasen bei der Anbringung des Anschlussrohrs 18 an der Wand 14 werden nachfolgend insbesondere mit Bezug auf die Figuren 2 bis 4 beschrieben.

Dazu erkennt man zunächst in Fig. 2, dass die Arretierelemente 40 dort in einer Montagevorbereitungsstellung sind. In dieser Montagevorbereitungsstellung sind die Arretierabschnitte 42 derselben durch jeweils zugeordnete Öffnungen 60 in der Rohrwandung 58 von außen nach innen hindurch geführt. Infolgedessen liegen die Arretierabschnitte 42 im Innenvolumenbereich 62 des Rohrkörpers 20 und stehen mit ihren hier keilartig ausgestalteten Arretiervorsprüngen 64 nicht über die Außenoberfläche 56 der Rohrwandung 58 hervor. Da im Montagezustand die Arretiervorsprünge 64 hervor stehen müssen, würde das Belassen der Arretierabschnitte 42 an der Außenseite des Rohrkörpers 20 das Einführen des Anschlussrohrs 18 in die Öffnung 16 in der durch den Pfeil P1 in Fig. 2 angezeigten Richtung behindern. Durch das Aufnehmen der Arretierabschnitte 42 im Innenvolumenbereich 62 wird jedoch dieses Einführen nicht beeinträchtigt. Es ist lediglich darauf zu achten, dass der Innendurchmesser bzw. die Innenabmessung der Öffnung 16 so gewählt ist, dass sie etwas größer ist, als die Außenabmessung des Rohrkörpers 20, und zwar mindestens so viel größer, wie dies das Bereitstellen der bandartigen Arretierelemente 40 mit ihren Rastbereichen 44 an der Außenseite des Rohrkörpers 20 erforderlich macht.

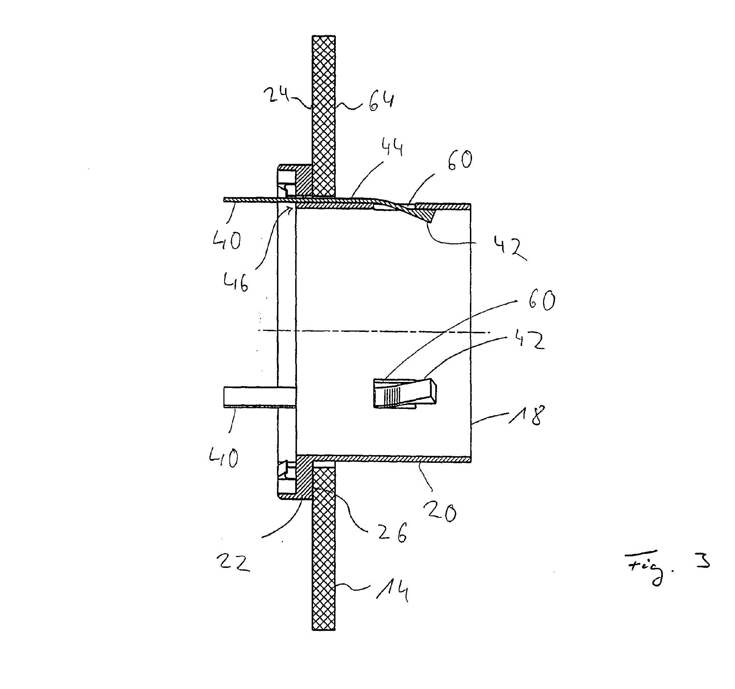

In einer ersten Phase des Montagevorgangs wird also das Anschlussrohr 18 mit seinem Rohrkörper 20 in die Öffnung 16 der Wand 14 eingeführt, und zwar so weit, bis der Vorsprungsbereich 22 mit seiner Abstützfläche 26 bzw. ggf. dem daran vorgesehenen Haftmaterial 28 an der Wand 14 anliegt. Dieser Zustand ist in Fig. 3 gezeigt. In dieser Phase bzw. in der Montagevorbereitungsstellung sind die Arretierelemente 40 durch die Durchgangsöffnungen 48 hindurch geführt, so dass der Rastbereich 44 bereits in Rastwechselwirkung mit dem Gegen-Rastbereich 46 ist bzw. in diese Wechselwirkung gebracht werden kann. Es sei hier darauf hingewiesen, dass nicht notwendigerweise über die gesamte Länge des Arretierelements 40 die Rasteinsenkungen 52 ausgebildet sein müssen. Aus Fertigungsgründen wird dies zwar vorteilhafterweise so sein, grundsätzlich wäre es jedoch ausreichend, lediglich in demjenigen Bereich Rasteinsenkungen 52 vorzusehen, der bei Anbringung an der Wand 14 dann in Wechselwirkung mit dem Gegen-Rastbereich 46 steht. In jedem Falle hat das bereits in der Montagevorbereitungsstellung realisierte Hindurchführen der Arretierelemente 40 durch die Durchgangsöffnungen 48 den Vorteil, dass dieser Vorgang nicht nachfolgend noch vorzunehmen ist.

Ist der in Fig. 3 gezeigte Zustand erreicht, in welchem der Vorsprungsbereich 22 an der Seite 24 der Wand 14 anliegt und der wesentliche Teil des Rohrkörpers 20 und insbesondere auch die Arretierelemente 40 mit ihren Arretiervorsprüngen 42 an der anderen Seite 65 der Wand 14 positioniert sind, kann dann an den durch die Öffnungen 48 hindurchgeführten Bereichen, also im Wesentlichen den bandartig ausgestalteten Rastbereichen 44 der Arretierelemente 40, ziehend angegriffen werden, um die Arretierabschnitte 42 dann aus dem Innenvolumenbereich 62 herauszuziehen und sie in der Richtung R1 bezüglich des Rohrkörpers 20 in Richtung auf die Wand 14 zu zu ziehen. Im Verlaufe dieser Bewegung nähern sich die Arretierabschnitte 42 bzw. die daran ausgebildeten keilartigen Arretiervorsprünge 64 der Wand 14 an, bis letztendlich der in Fig. 4 auch erkennbare Zustand realisiert ist. In diesem Zustand sind die Arretiervorsprünge 42 fest gegen die Wand 14 gezogen, was wiederum zur Folge hat, dass auch der Vorsprungsbereich 22 fest gegen die Seite 24 der Wand 14 gepresst ist. Auf Grund der keilartigen Ausgestaltung der Arretiervorsprünge 64 der verschiedenen Arretierelemente 40 wird nicht nur diese in der Längsrichtung L wirksame Arretierwirkung erlangt, sondern es wird gleichzeitig auch eine Zentrierung des Anschlussrohrs 18 in der Öffnung 16 erlangt. Hierzu sind vorzugsweise über den Umfang des Rohrkörpers 20 mehrere derartige Arretierelemente 40 mit vorzugsweise symmetrischem Abstand angeordnet.

Ist der in Fig. 4 dargestellte Arretierzustand einmal erlangt, können die Arretierelemente 40 sich nicht mehr in Richtung R2 zurückbewegen, und zwar durch die Rastwechselwirkung des jeweiligen Rastvorsprungs 50 mit den Rasteinsenkungen 52. In einem folgenden Montageabschnitt können dann die über den Vorsprungsbereich 22 axial überstehenden Bereiche der Arretierelemente 40 abgetrennt werden, so dass, wie dies auch in Fig. 4 erkennbar ist, die Arretierelemente 40 näherungsweise bündig mit dem axialen Ende des Rohrkörpers 20 abschließen.

In einem weiteren Montagevorgang kann das Luftströmelement 32 dann an dem Anschlussrohr 18 angebracht werden, wie vorangehend bereits erläutert. Weiter kann eine beispielsweise flexible Rohrleitung 66 auf den Rohrkörper 20 aufgeschoben werden, und zwar vorzugsweise so weit, dass die Öffnungen 60 in der Rohrwandung 58 vollständig überdeckt sind und hier keine Leckage vorhanden ist. Nachfolgend kann durch ein Befestigungselement, beispielsweise eine Rohrschelle 68, die Rohrleitung 66 auf der Außenoberfläche 56 festgelegt werden. Es ist dann der fertig montierte Zustand des Anschlussrohrs 18 bzw. des Rohrleitungssystems 10 vorhanden. In diesem Zustand ist erstens das Anschlussrohr 18 fest an der Wand 14 arretiert, wobei gleichzeitig ein dichter Abschluss der Öffnung 16 realisiert ist. Zweitens ist das Luftströmelement 32 drehbar an dem Anschlussrohr 20 getragen und somit beliebig so gedreht werden, dass die aus der Öffnung 38 strömende Luft in verschiedene Raumbereiche des Innenraums 12 geleitet werden kann. Weiter ist die flexible Rohrleitung 66 sicher auf dem Rohrkörper 20 befestigt.

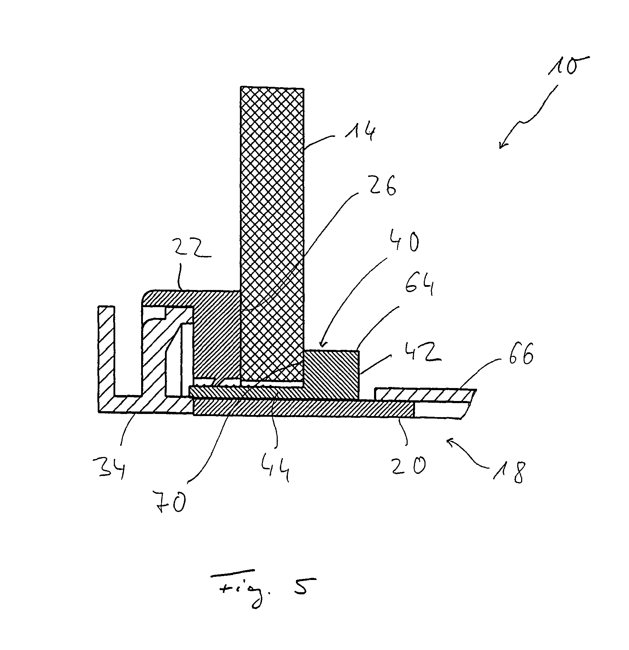

In Fig. 5 ist eine abgewandelte Ausgestaltungsform dargestellt. Die hier dargestellte Abwandlung betrifft die Ausgestaltung der Arretiervorsprünge 64 der Arretierabschnitte 42. Diese sind hier nicht keilartig, sondern blockartig ausgestaltet und stellen somit eine Abstützfläche 70 bereit, die der Abstützfläche 26 am Vosprungsbereich 22 im Wesentlichen parallel gegenüber liegt, so dass hier eine flächige Einspannung der Wand 14 erzeugt wird.

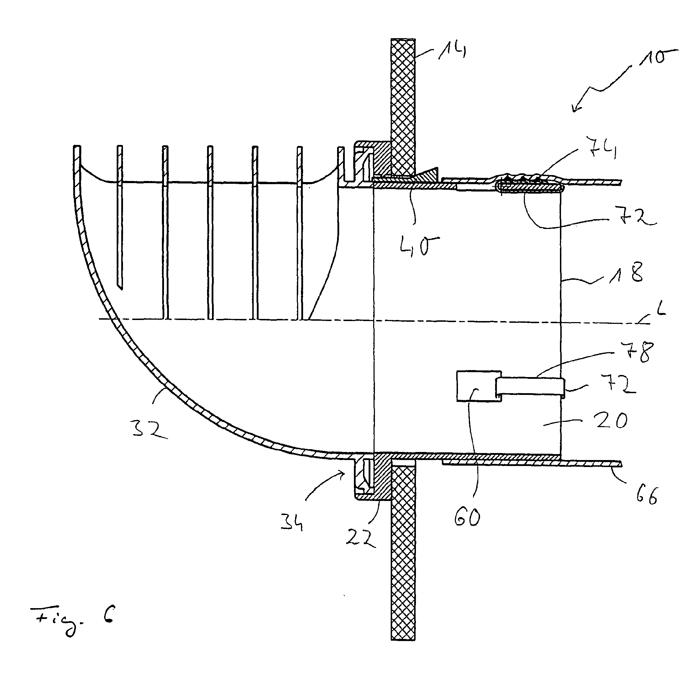

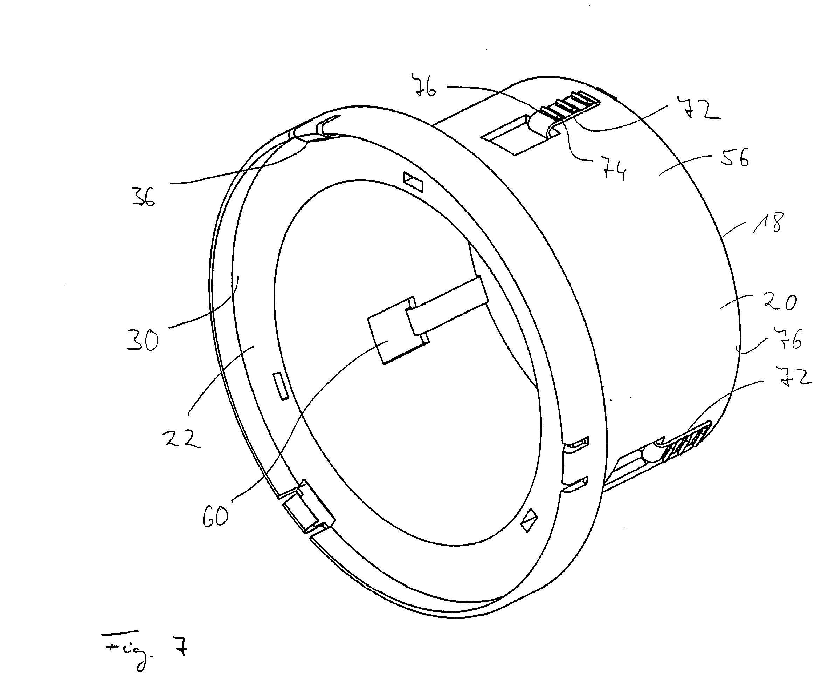

Eine weitere Abwandlung ist in den Figuren 6 und 7 gezeigt. Hier sind zum Festlegen der Rohrleitung 66 am Rohrkörper 20 beispielsweise aus Federstahl ausgestaltete Halteelemente 72 vorgesehen. Diese sind so geformt, dass sie mit einem mit hakenartigen Haltevorsprüngen 74 versehenen Halteabschnitt 76 an der Außenoberfläche 56 des Rohrkörpers 20 liegen, die Öffnungen 60 durchgreifen und mit einem Sicherungsabschnitt 78 sich entlang der Innenseite des Rohrkörpers 20 erstrecken und dessen vom Vorsprungsbereich 22 entfernt liegendes axiales Ende 76 übergreifen. Die Haltevorsprünge 74 sind so geformt bzw. dimensioniert, dass nach dem Aufschieben bzw. bei dem Aufschieben der flexiblen Rohrleitung 66 diese Rohrleitung 66 nach radial außen so belasten, dass eine gegen ungewolltes Abziehen gesicherte Haltewechselwirkung erzeugt wird. Auf Grund der Flexibilität der Rohrleitung 66 wird diese in anderen Umfangsbereichen bzw. anderen Längenbereichen vollflächig an der Außenoberfläche 56 anliegen, so dass wieder ein dichter Anschluss realisiert ist. Ansonsten entspricht die in den Figuren 6 und 7 dargestellte Ausgestaltungsvariante im Wesentlichen der vorangehend mit Bezug auf die Figuren 1 bis 4 beschriebenen Ausgestaltungsvarianten, so dass auf die diesbezüglichen Ausführungen verwiesen wird.

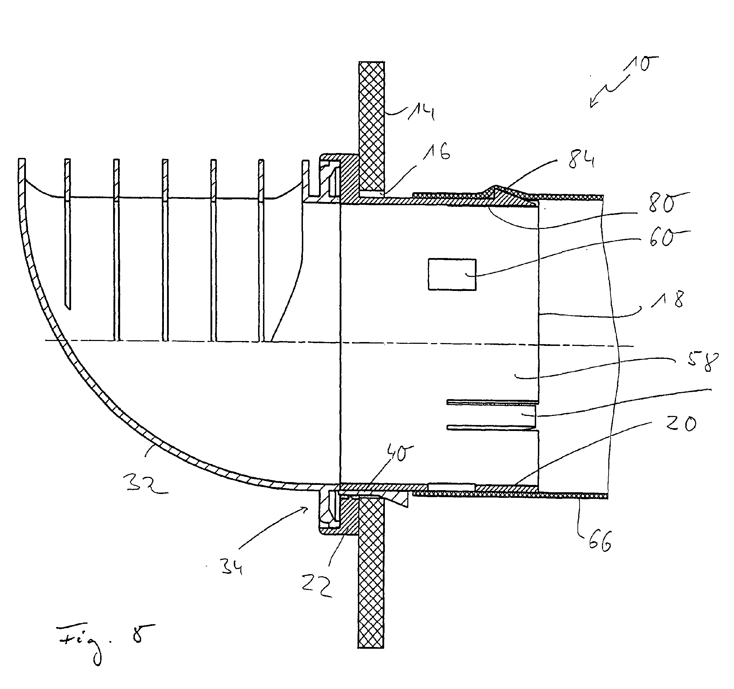

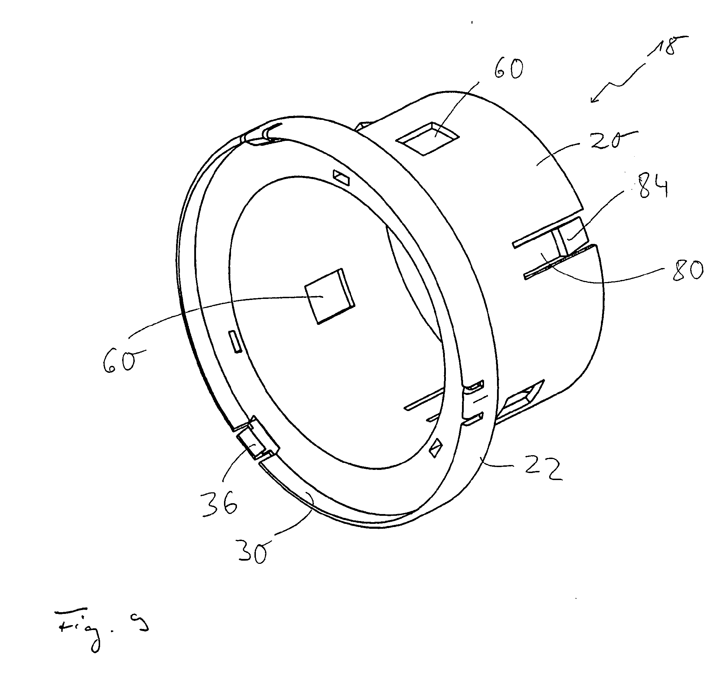

Eine weitere abgewandelte Ausgestaltungsform ist in den Figuren 8 bis 10 gezeigt. Auch hier entspricht der grundsätzliche Aufbau dem mit Bezug auf die Figuren 1 bis 4 beschriebenen, so dass auf diese Ausführungen verwiesen wird.

Zur festen Halterung der Rohrleitung 66 am Rohrkörper 20 des Anschlussrohrs 18 sind hier in Umfangsrichtung um die Längsachse L verteilt am Rohrkörper 20 mehrere Haltezungen 80 vorgesehen. Diese erstrecken sich in Richtung der Längsachse L und sind in einem Endbereich integral an den verbleibenden Teil der Rohrwandung 58 angebunden. In ihrem anderen Endbereich tragen diese Haltezungen 80 nach radial außen greifende Haltevorsprünge 84. In dem in Fig. 8 dargestellten zusammengefügten Zustand pressen diese Haltevorsprünge 84 auch bedingt durch die Federeleastizität der Haltezungen 80 nach radial außen gegen die Innenseite der Rohrleitung 66 und stellen somit eine sichere Halterungswirkung bereit. Hier sind vorzugsweise über den Umfang verteilt mehrere derartige Haltezungen 80 vorgesehen, wobei die Umfangsrichtung versetzt jeweils eine derartige Haltezunge 80 und eine Öffnung 60 aufeinander folgen können.

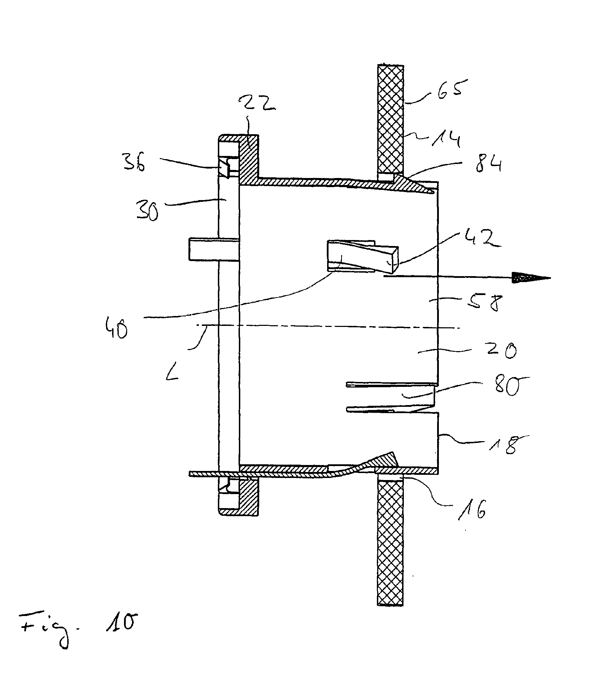

Man erkennt vor allem in Fig. 10, dass die Bemessung der Haltezungen 80 bzw. der daran vorgesehenen Haltevorsprünge 84 im Bezug auf die Öffnung 16 in der Wand 14 vorzugsweise so gewählt ist, dass die durch die Haltevorsprünge 84 definierte Außenabmessung, also beispielsweise ein diese Haltevorsprünge 84 umgebender Umfangskreis, einen größeren Radius bzw. eine größere Abmessung bereitstellt, als die entsprechende Innenabmessung der Öffnung 16. Beim Einführen des Anschlussrohrs 18 in die Öffnung 16 werden dann, wie in Fig. 10 erkennbar, die Haltezungen 80 durch Entlanggleiten ihrer Haltevorsprünge 84 mit entsprechenden Keilflächen an der Innenseite der Öffnung 16 nach radial innen gepresst, und federn dann, wenn sie durch die Öffnung 16 hindurchgeführt worden sind, wieder nach radial außen, so dass sie die Wand 14 an ihrer Seite 65 bereits radial übergreifen. Neben der Tatsache, dass eine derartige Bemessung der Rastvorsprünge 84 eine erhöhte Stabilität in der Haltewechselwirkung mit der Rohrleitung 66 vorsieht, wird ferner beim Montagevorgang gewährleistet, dass dann, wenn diese Haltevorsprünge 84 einmal durch die Öffnung 16 hindurchgeführt sind, bereits eine verliersichere Halterung des Anschlussrohrs 18 an der Wand 14 erzeugt ist, wenngleich in diesem Zustand dann der Montagevorgang noch nicht abgeschlossen ist.

Es sei darauf hingewiesen, dass selbstverständlich auch bei dieser Ausgestaltungsform an jeder Haltezunge mehrere Haltevorsprünge 84 ausgebildet sein können, beispielsweise in einem Muster, wie dies bei den in Fig. 7 erkennbaren Halteelementen 72 der Fall ist.

Durch die vorliegende Erfindung ist ein Anschlussrohr bzw. mit diesem ein Rohrleitungssystem vorgesehen, das in einfacher Art und Weise aufgebaut werden kann, in ebenso einfacher Art und Weise an einer Wand 14 ohne Werkzeug festgelegt werden kann, gleichwohl aber eine sichere Arretierung erfährt. Insbesondere ist der Montagevorgang dadurch leicht zu realisieren, dass die zum Festlegen des Anschlussrohrs an der dafür vorgesehenen Tragestruktur, also beispielsweise einer Wand, erforderlichen Manipulationen von derjenigen Seite aus erfolgen, von welcher aus das Anschlussrohr in die dafür vorgesehene Öffnung eingeführt wird. Auch die zum Festlegen eingesetzten Arretierelemente sind von äußerst einfacher und kostengünstigem Aufbau, insbesondere können sie nach Art so genannter Kabelbinder aufgebaut sein.

Abschließend sei darauf hingewiesen, dass selbstverständlich das erfindungsgemäße System bzw. das erfindungsgemäße Anschlussrohr auch in verschiedensten anderen Einsatzzwecken, also nicht notwendigerweise nur im Fahrzeugbau, eingesetzt werden kann, sondern beispielsweise auch in der Klimatisierungstechnik in Gebäuden oder überall dort, wo Rohrleitungen, insbesondere Luft führende Rohrleitungen durch eine Wand hindurchgeführt werden müssen bzw. an einer derartigen Wand festgelegt werden müssen. Dabei ist auch die hohe Flexibilität hinsichtlich der Anbringbarkeit an der Wand selbst von besonderem Vorteil, da die Wechselwirkung mit einer Vielzahl an Wänden verschiedener Dicke realisiert werden kann.

## Patentansprüche

1. Anschlussrohr, insbesondere für ein Luftführungssystem in einem Fahrzeug, umfassend einen Rohrkörper (20), an dem Rohrkörper (20) einen Abstützbereich (22) zur Abstützung an einer Tragestruktur (14), wenigstens ein Arretierelement (40), durch welches der Abstützbereich (22) in Abstützanlage an der Tragestruktur (14) arretierbar ist, wobei das wenigstens eine Arretierelement (40) einen Rastbereich (44)aufweist, der in Zusammenwirkung mit einem Gegen-Rastbereich (46) eine Bewegung des Arretierelements (40) in einer ersten Richtung (R1) zulässt und eine Bewegung in einer der ersten Richtung (R1) entgegengesetzten zweiten Richtung (R2) nicht zulässt, wobei bei Bewegung in der ersten Richtung (R1) ein Arretierabschnitt (42) des wenigstens einen Arretierelements (40) sich in Richtung auf den Abstützbereich (22) zu bewegt.

2. Anschlussrohr nach Anspruch 1,
**dadurch gekennzeichnet, dass** der Abstützbereich (22) einen über den Rohrkörper (20) nach radial außen vorspringenden Vorsprungsbereich (22) umfasst.

3. Anschlussrohr nach Anspruch 1 oder 2,
**dadurch gekennzeichnet, dass** der Gegen-Rastbereich (46) eine Durchgangsöffnung (48) für den Rastbereich (44) des wenigstens einen Arretierelements (40) umfasst, wobei zur Herstellung der Rastwechselwirkung oder bei hergestellter Rastwechselwirkung der Rastbereich (44) durch die Durchgangsöffnung (48) hindurch geführt ist.

4. Anschlussrohr nach Anspruch 2 und Anspruch 3,
**dadurch gekennzeichnet, dass** die Durchgangsöffnung (48) wenigstens bereichsweise in dem Abstützbereich (22) vorgesehen ist.

5. Anschlussrohr nach einem der Ansprüche 1 bis 4,
**dadurch gekennzeichnet, dass** der Rastbereich (44) eine Mehrzahl von Rasteinsenkungen (52) umfasst, in welche wenigstens ein Rastvorsprung (50) des Gegen-Rastbereichs (46) eingreifen kann.

6. Anschlussrohr nach einem der Ansprüche 1 bis 5,
**dadurch gekennzeichnet, dass** der Arretierabschnitt (42) des wenigstens einen Arretierelements (40) einen zur Arretieranlage an der Tragestruktur (14) nach radial außen vorspringenden Arretiervorsprung (64) umfasst.

7. Anschlussrohr nach Anspruch 6,
**dadurch gekennzeichnet, dass** der Arretiervorsprung (64) keilartig ausgebildet ist.

8. Anschlussrohr nach einem der Ansprüche 1 bis 7,
**dadurch gekennzeichnet, dass** in dem Rohrkörper (20) eine Montagevorbereitungs-Aufnahmeformation (60) für den Arretierabschnitt (42) des wenigstens einen Arretierelements (40) vorgesehen ist, in welcher der Arretierabschnitt (42) in einer Montagevorbereitungsstellung aufgenommen ist.

9. Anschlussrohr nach Anspruch 8,
**dadurch gekennzeichnet, dass** die Montagevorbereitungs-Aufnahmeformation (60) eine Öffnung (60) in einer Wandung (58) des Rohrkörpers (20) umfasst, in welche das wenigstens eine Arretierelement (40) wenigstens mit seinem Arretierabschnitt (42) in der Montagevorbereitungsstellung derart eingeführt ist, dass wenigstens ein Teil des Arretierabschnitts (42) im Innenbereich des Rohrkörpers (20) aufgenommen ist.

10. Anschlussrohr nach Anspruch 3 und Anspruch 8 oder 9,
**dadurch gekennzeichnet, dass** in der Montagevorbereitungsstellung das wenigstens eine Arretierelement (40) in die Durchgangsöffnung (48) eingeführt ist.

11. Anschlussrohr nach einem der Ansprüche 1 bis 10,
**dadurch gekennzeichnet, dass** an dem Abstützbereich (22) eine Haftlage (28) zur Herstellung einer Haftwechselwirkung mit der Tragestruktur (14) vorgesehen ist.

12. Anschlussrohr nach einem der Ansprüche 1 bis 11,
**gekennzeichnet durch** eine erste Halteformation (30, 36) für ein Luftausströmelement oder/und ein Lufteinströmelement.

13. Anschlussrohr nach Anspruch 12,
**dadurch gekennzeichnet, dass** die erste Halteformation (30, 36) an dem Abstützbereich (22) oder an dem Luftausströmelement bzw. Lufteinströmelement vorgesehen ist.

14. Anschlussrohr nach einem der Ansprüche 1 bis 13,
**dadurch gekennzeichnet, dass** an dem Rohrkörper (20) eine zweite Halteformation (72, 74; 80, 84) für eine an dem Rohrkörper (20) festzulegende Rohrleitung (66) vorgesehen ist.

15. Anschlussrohr nach Anspruch 14,
**dadurch gekennzeichnet, dass** die zweite Halteformation (72, 74; 80, 84) wenigstens einen hakenartigen Haltevorsprung (74; 84) umfasst.

16. Anschlussrohr nach Anspruch 15,
**dadurch gekennzeichnet, dass** der wenigstens eine Haltevorsprung (74) an einem von dem Rohrkörper (20) separat ausgebildeten und daran fest gehaltenen Halteelement (72) vorgesehen ist.

17. Anschlussrohr nach Anspruch 15,
**dadurch gekennzeichnet, dass** der wenigstens eine Haltevorsprung (84) an einer mit dem Rohrkörper (20) integral ausgebildeten Haltezunge (80) vorgesehen ist.
